# EUROPÄISCHE PATENTSCHRIFT

(11) **EP 2 481 771 B1**
(45) Veröffentlichungstag und Bekanntmachung des Hinweises auf die Patenterteilung: **03.05.2017**
(21) Anmeldenummer: 12150975.6
(22) Anmeldetag: 12.01.2012
(51) Int. Cl.: C08K 3/00, C08K 5/00, C08L 67/00

(54) **Polymerzusammensetzung und Verfahren zur Herstellung von Produkten mit variabler biologischer Abbaubarkeit**
Polymer composition and method for producing products with variable biodegradability
Composition polymère et procédé de fabrication de produits ayant une biodégradabilité variable

(30) Priorität: 26.01.2011 DE 102011009520
(43) Veröffentlichungstag der Anmeldung: 01.08.2012
(73) Patentinhaber: THÜRINGISCHES INSTITUT FÜR TEXTIL- UND KUNSTSTOFF-FORSCHUNG e.V., 07407 Rudolstadt (DE)
(72) Erfinder: Lützkendorf, Renate, 07426 Königsee (DE); Ganß, Katrin, 98646 Gleichamberg (DE); Nechwatal, Axel, 07422 Blankenburg (DE)
(74) Vertreter: Fritz, Edmund Lothar

(56) Entgegenhaltungen:
- EP-A1- 0 889 084
- EP-A1- 1 375 592
- WO-A1-94/12352
- DATABASE WPI Week 200840 Thomson Scientific, London, GB; AN 2008-G33914 XP002676911, -& WO 2008/038350 A1 (FUJITSU LTD) 3. April 2008 (2008-04-03)

## Beschreibung

Die vorliegende Erfindung betrifft ein biologisch abbaubares Produkt aus einer Polymerzusammensetzung umfassend wenigstens ein biologisch abbaubares, thermoplastisches Polymer (Biopolymer) ausgewählt aus der Gruppe umfassend Polylactide, Polyhydroxyalkanoate und abbaubare Polyester, enthaltend wenigstens eine photokatalytisch wirksame Substanz und eine photochrome Substanz. Unter Biopolymeren werden hier insbesondere Polymere verstanden, welche durch Mikroorganismen vollständig biologisch abgebaut werden können. Dabei ist vorerst irrelevant, ob es sich bei der Rohstoffbasis um petrochemische oder nachwachsende Rohstoffe handelt.

Im Vergleich zu anderen konventionellen Polymeren, wie Polyethylen, Polypropylen oder Polycarbonat, heben sich die oben genannten Biopolymere durch ihre grundsätzliche biologische Abbaubarkeit ab.

Verarbeitbar sind die oben genannten Polymermaterialien über alle nach dem aktuellen Stand der Technik bekannten kunststoffverarbeitenden Technologien, wobei im Rahmen der vorliegenden Erfindung bei der Herstellung von Produkten aus den genannten Polymerzusammensetzungen die Formgebung aus einer thermoplastischen Schmelze genutzt werden soll. Beispielsweise werden dabei Formpressverfahren, Extrusions- und Spitzgießverfahren sowie das Erspinnen von Fasern, Filamenten und Vliesen angewendet.

Biopolymere werden derzeit hauptsächlich als Verpackungsmaterial in Form von Folien, Beuteln oder Schalen verwendet. Neben der Anwendung als Verpackung lassen sich aber beispielsweise PLA und PHA in fast allen technischen Bereichen entsprechend adäquater Kunststoffe einsetzen. PLA-Fäden und textile Flächen - mit hoher Reinheit des Ausgangsmaterials- gehen seit Jahren mit großem Erfolg bspw. als resorbierbare Nähmaterialien in der Medizin oder auch in den Bereich des Tissue Engineering ein. Weitere Anwendungen von textilen Flächen findet man im Hygienebereich, bei Bekleidung und Heimtextilien sowie als Geotextilien, aber auch für Filter oder militärische Zwecke (Tarnnetze).

Nachteilig bei vielen der eingangs erwähnten Biopolymeren ist die Diskrepanz zwischen den Materialparametern auf der einen Seite und der biologischen Abbaubarkeit auf der anderen Seite. So haftet gerade PLA - trotz der guten mechanischen Eigenschaften, die denen von Engineering-Kunststoffen wie Polyamid und Polyethylenterephthalat kaum nachstehen - noch immer das Image eines minderwertigen Wegwerfmaterials an. Eine werkstoffliche Aufwertung ist daher sinnvoll und notwendig, da die biologische Abbaubarkeit alleine den höheren Materialpreis nicht rechtfertigt.

Die Wertigkeit dieser Polymere kann zum Beispiel durch die Einarbeitung funktionalisierender Farbstoffe, wie organische oder anorganische Pigmente, organische, anorganische und polymere Farbstoffe, photochrome, thermochrome und prechrome Komponenten, farbige und farblose Precursorfarbstoffe angehoben werden. Bevorzugt werden nach dem Stand der Technik bekannte photochrome oder thermochrome Farbstoffe wie sie beispielsweise in US 5490908 oder bevorzugt in EP 1025107 B1 oder US 6294112 B1 beschrieben werden.

Derartige Farbstoffe werden heute in nicht biologisch abbaubaren Kunststoffen eingesetzt, beispielweise in optischen Linsen (abdunkelnde Brillengläser). Dabei muss berücksichtigt werden, dass auch die umgebende Polymermatrix einen Einfluss auf die photochromen Eigenschaften hat. Die Umwandlungsreaktionen werden vor allem durch flexible Polymerketten begünstigt, da hierzu molekulare Bewegungen notwendig sind. Aus diesem Grund eignen sich beispielsweise thermoplastische Elastomere wie in DE 102008003313 A1 beschrieben zur Ausnutzung photochromer Effekte.

Die Einarbeitung photo- oder thermochromer Substanzen in eine thermoplastische Schmelze ist bereits aus WO 94/12352 bekannt. Dort wird die Einarbeitung verschiedener strahlungssensitiver Komponenten beschrieben: organische oder anorganische Pigmente, organische, anorganische und polymere Farbstoffe, photochrome, thermochrome und prechrome Komponenten, farbige und farblose Precursorfarbstoffe, farbige Füllstoffe, UV-Stabilisatoren, Antioxidantien, Flammhemmer, Säurebildner, photooxidativ und photoreduktiv wirkende Substanzen. Gemäß der Beschreibung in der WO 94/12352 gehen diese Substanzen in unterschiedliche thermoplastische und/oder duroplastische Polymere ein. Durch Laserbestrahlung lassen sich so polymere Materialien markieren. Die so entstandene Markierung ist abrieb- und kratzbeständig, deformationsfrei, dimensionsstabil und korrosionsresistent und nicht zwingend reversibel. Weiterhin sind die Markierungen unter Gebrauchsbedingungen sehr beständig gegenüber Wärme, Bewitterung und Strahlung.

Die genannten Erfindungen und bisherigen Anwendungen photo- oder thermochromer Pigmente zielen immer auf einen möglichst langanhaltenden Effekt hin. Dieser Effekt ist auch in der Landwirtschaft und im Gartenbau interessant, da die o.g. photochromen oder thermochromen Additive auf äußere Umwelteinflüsse (Colour-Change-Effekte durch Licht- oder Temperaturveränderungen) reagieren und somit die Transmission des Produkts (Abdeckfolie, Mulchvlies, Folien für Gewächshäuser) verändern. Damit bieten derartige Produkte ein aktives Licht- und Wärmemanagement: In Abhängigkeit von der einfallenden UV-Strahlung und/oder von Wärmequellen unterschiedlicher Art verändern sich die Farbe sowie das Transmissionsverhalten der Produkte grundlegend. So lässt sich etwa ein Absorptionsfenster für die Sonneneinstrahlung maßschneidern. Produkte (aus konventionellen Kunststoffen) mit eingestelltem Transmissionsspektrum sind bereits aus den Bereichen Gartenbau und Landwirtschaft bekannt und werden eingesetzt, um das Pflanzenwachstum zu steuern und die Ernteerträge zu erhöhen. Das bei den bekannten Systemen auf diese Weise eingestellte Transmissionsspektrum hängt allerdings nicht von der einfallenden Strahlung ab, sondern bleibt unabhängig von äußeren Umwelteinflüssen konstant. Genau dies ist aber bei photochromen/thermochromen Materialien nicht der Fall- mit zunehmender Intensität der Einstrahlung verändert sich hier die Transmission.

Weiterhin ist die einfallende IR-Strahlung von Bedeutung: bis zu einem gewissen Maße fördert sie das Wachstum der Pflanze, ein Übermaß an Wärmestrahlung schadet jedoch (bis hin zur Verbrennung). Die Farbe des in der Landwirtschaft oder im Gartenbau verwendeten Kunststoffmaterials ist dabei ein entscheidender Faktor. Daher wäre es hier äußerst nützlich, die Transmission von IR-Strahlung und damit verbunden die Aufheizung durch einen (thermisch gesteuerten) Farbwechsel zu regulieren. Ebenso ist ein UV-angeregter Farbwechsel zum Schutz lichtempfindlicher Pflanzen interessant.

Da im Falle von Mulchvliesen oder -folien diese nach der Ernte wieder entfernt und vor dem Recycling gereinigt werden müssen, bietet sich der Einsatz von Polymermaterialien an, die untergepflügt werden können und sich in einem angemessenen Zeitraum (z.B. bis zum nächsten Frühjahr) biologisch abbauen. Hierzu werden bisher beispielsweise Folien auf Stärkebasis, PLA oder aus Ecovio verwendet. Diese weisen bislang jedoch nicht die o.g. Vorteile photochromer Materialien auf. Zudem bauen diese nicht in jedem Fall im gewünschten Zeitraum vollständig ab, so dass zu Beginn der nächsten Saison Folienreste nachträglich eingesammelt werden müssen.

Eine kontrollierte Abbaubarkeit von Kunststoffen kann durch den Zusatz photosensitiver Stoffe erreicht werden. Dazu wird ein Masterbatch auf Basis von Polyethylen, modifizierter Stärke, Ca-CO₃, Oxidationsmitteln, photosensitiver Stoffe und Zusätzen, die den Abbau kontrollieren sollen, verwendet. Auch gibt es abbaubare Materialzusammensetzungen aus Stärke, photosensitiven Zusätzen, einem abbaubaren Initiator, einem Oxidationsmittel und Polyethylen.

Fraglich bei diesen Kombinationen ist, ob die verwendeten, bekanntermaßen nicht biologisch abbaubaren Komponenten wie Polyethylen wirklich durch diese Zusätze biologisch abgebaut werden können, oder ob sie lediglich in sehr kleine Partikel zerfallen. Ferner verschlechtern die aufgeführten Additive in der Regel die hervorragenden mechanischen Werkstoffkennwerte der Biokunststoffe.

Weiterhin ist es bekannt, dass photokatalytische Substanzen durch die Bildung von Radikalen chemische Reaktionen auslösen und somit organische Materialien unselektiv abbauen. Der alleinige Einsatz photokatalytisch aktiver Substanzen führt zu einer erhöhten, unselektiven Abbaugeschwindigkeit, verbunden mit einer gleichzeitig auftretenden Abnahme der mechanischen Eigenschaften. Dies hat negative Veränderungen der Gebrauchseigenschaften während der Nutzungsdauer zur Folge.

Die EP 1 375 592 A1 betrifft bioabbaubare Polylactid-Harzzusammensetzungen, die Proteine wie Seide, Gelatin, Keratin, Elastin, Gluten oder Sojabohnen enthalten. Weiterhin enthalten diese bioabbaubaren Harzzusammensetzungen abgebaute pflanzliche Polysaccharide auf Mannose-Basis, sie enthalten jedoch keine photo- oder thermochromen Zusätze.

In der WO 2008/038350 A1 werden biologisch abbaubare Kunststoffe mit den Merkmalen der eingangs genannten Gattung beschrieben, die mit einem nicht näher spezifizierten Photokatalysator gemischt werden, welcher mit einem anorganischen Material beschichtet ist. Die in dieser Druckschrift beschriebenen Photokatalysatoren beschleunigen erst dann den Abbau des Kunststoffs, wenn das Material pulverisiert wird, d.h. wenn der Photokatalysator an die Oberfläche kommt.

Ziel der Erfindung ist es, die biologische Abbaubarkeit der Polymerzusammensetzung entsprechend der jeweiligen konkreten Anforderung einzustellen und gleichzeitig zu sichern, dass sich die physikalischen Eigenschaften der Biopolymere während des Gebrauchs nicht signifikant verschlechtern. D.h., die Materialparameter je nach Anwendung für die Gebrauchsdauer aufrecht zu erhalten und den Biopolymeren zusätzliche Funktionen zu verleihen, die deren Gebrauchswert deutlich erhöhen.

Diese Aufgabe wird gelöst durch eine Polymerzusammensetzung mit den Merkmalen des Patentanspruchs 1. Erfindungsgemäß enthält die Polymerzusammensetzung weiterhin wenigstens eine photochrome Substanz. Diese photochrome Substanz ermöglicht eine Beeinflussung der Geschwindigkeit des biologischen Abbaus und schafft eine zusätzliche Funktionalisierung der Polymerzusammensetzung um den strahlungsabhängigen Farbwechsel. Bei der photokatalytischen Substanz handelt es sich um eine Metallverbindung, nämlich ein Metalloxid, modifiziertes Metalloxid, dotiertes Metalloxid und/oder einen Halbleiter.

Aufgabe der vorliegenden Erfindung ist es weiterhin, ein geeignetes Verfahren zur Herstellung eines biologisch abbaubaren Produkts aus einer solchen Polymerzusammensetzung zur Verfügung zu stellen.

Diese Aufgabe wird gelöst durch ein Verfahren mit den Merkmalen des Anspruchs 7. Vorteilhaft ist dabei, dass erst unmittelbar vor der Herstellung des jeweiligen Endprodukts die Geschwindigkeit des biologischen Abbaus justiert wird, ohne die werkstofflichen Kennwerte zu verändern.

Ein wesentlicher Lösungsansatz der vorliegenden Erfindung besteht deshalb weiterhin darin, die guten mechanischen Kennwerte um eine zusätzliche Funktionalisierung zu ergänzen, insbesondere um den strahlungs- oder temperaturabhängigen Farbwechsel (Colour-Change-Effekte) und um die im Zusammenspiel mit den photokatalytisch aktiven Substanzen hervorgerufene und justierbare biologische Abbaubarkeit.

Dies erfolgt entweder durch die Zugabe und Einarbeitung eines speziell auf die Anforderungen abgestimmten Masterbatches oder durch die direkte Einarbeitung geeigneter Substanzen während der Verarbeitung der Polymere im geschmolzenen Zustand. Der Zusatz besteht dabei aus einer Kombination photokatalytisch aktiver Substanzen und photochromer Pigmente.

Bei der Einarbeitung photochromer Substanzen in bioabbaubare Polymere wurde nun überraschend gefunden, dass diese nach einer vorherigen Bewitterung eine höhere Abbaugeschwindigkeit aufweisen als das reine Polymer, wobei die Gebrauchseigenschaften, insbesondere die mechanischen Eigenschaften, während der Exposition unverändert bleiben. Durch die Einarbeitung weiterer Substanzen, bspw. mit hoher Elektronenbeweglichkeit oder photokatalytischer Aktivität, kann die Abbaugeschwindigkeit weiter erhöht werden. Derartige Substanzen mit hoher Elektronenbeweglichkeit sind anorganische oder organische Eisen- oder Cobaltsalze (z.B. Formiate, Acetate, Citrate oder Tartrate), Verbindungen mit einer Chinongruppe (z.B. Hydrochinon und dessen Derivate) oder Verbindungen mit einem Mono-, Oligo- oder Polysaccharid (z.B. Glucose, Fructose, Saccharose). Als photokatalytisch aktive Substanzen eignen sich Metallverbindungen, insbesondere Metalloxide, modifizierte Metalloxide, dotierte Metalloxide und/oder Halbleiter. Bevorzugt handelt es sich um TiO₂ in Anatas-Modifikation.

Es ist bislang nicht bekannt, dass diese photochromen Substanzen auch zu einem Abbau der Polymere führen, in die sie eingearbeitet wurden, bzw. dass sie die durch photokatalytische Substanzen hervorgerufenen Abbauvorgänge beeinflussen.

Die Einarbeitung dieser Substanzen erfolgt nach im Stand der Technik bekannten Verfahren über Batches oder direkt während der Verarbeitung der thermoplastischen Schmelze in den allerletzten Schritten.

Bei den dabei genutzten photochromen Zusätzen handelt es sich um Vertreter aus den Gruppen der Spiropyrane, der Spirooxazine, der Fulgide bzw. Fulgimide, der 2,1-b Naphtopyrane, der 1,2-b Naphtopyrane, der2,1-b Naphtoxazine oder der 1,2-b Naphtoxazine, Photochrome Substanzen werden in Konzentrationen von 0,01 bis 1 %, vorzugsweise von 0,03 bis 0,1 % zugegeben. Durch die Kombination von photokatalytisch aktiven Substanzen mit photochromen Farbstoffen wird der photokatalytische Effekt dieser gesteigert. Dabei handelt es sich bevorzugt um TiO₂ (Anatas), in Gewichtsanteilen von 0,5 bis 5 %. Ergänzend zu den photokatalytisch wirksamen Substanzen können auch Substanzen mit hohem Redoxpotential und/oder mit erhöhter Elekronenbeweglichkeit in den Polymerzusammensetzungen enthalten sein, wie beispielsweise anorganische oder organische Eisen- oder Cobaltsalze (z.B. Formiate, Acetate, Citrate oder Tartrate), Verbindungen mit einer Chinongruppe (z.B. Hydrochinon und dessen Derivate) oder Verbindungen mit einem Mono-, Oligo- oder Polysaccharid (z.B. Glucose, Fructose, Saccharose)in Konzentration von 0,1 bis 10 %, vorzugsweise 1 bis 5 %, um die Abbaugeschwindigkeit weiter zu erhöhen.

Die so modifizierten Biopolymere können ausgehend von einer thermoplastischen Schmelze zu Stapelfasern, Filamenten, Spinnvliesen, Folien oder spritzgegossenen Teilen verarbeitet werden.

Die nachfolgenden Beispiele enthalten prinzipielle Möglichkeiten der Inkorporation von Systemen, die bei biobasierten Polyestern wie PLA oder PHA sowohl die Einstellung einer maßgeschneiderten biologischen Abbaubarkeit gestatten als auch ein neuartiges Licht- und Wärmemanagement ermöglichen.

### Beispiele

### Allgemeine Versuchsdurchführung

Für die Versuche wurde PLA-Granulat Typ 3251 D von NatureWorks LLC, USA verwendet. Bei den Zusätzen handelte es sich um photochrome Pigmente Reversacol^{®} der Firma Vivimed.

Die photochromen Pigmente wurden als 1 % ige Batches auf Basis PLA vorbereitet. TiO₂ (sowohl in der Anatas- als auch in Rutil-Modifikation) wurde auf die Granulate in entsprechenden Anteilen aufgepulvert.

### Beispiel 1 Funktionalisierte PLA-Folie mit eingestellter biologischer Abbaubarkeit

Die Batches und die Folien wurden an einem Extruder der Firma Thermo Fisher Scientific Karlsruhe hergestellt. Dieses System besteht aus den Komponenten
- Antriebseinheit - RheoDrive 16 für PolyLab OS einschließlich Drehmomentsensor,
- gleichlaufender modularer Doppelschneckenextruder Rheomex PTW 16/25 XL (25:1 L/D), 16 mm Schnecken mit horizontal geteiltem Extruderrohr, verlängert auf 40:1 L/D
- einschließlich Dosierschnecken sowie einer beheizbaren Rundstrangdüse 3 mm bzw. einer beheizbaren Breitschlitzdüse 50 mm
- Wasserbad zur Kühlung und Granulator zum Schnitt der extrudierten Rundprofile
- Folienabzugseinheit zum Abziehen, Kühlen und Aufwickeln der extrudierten Folien

Die Verarbeitungstemperaturen lagen bei 180°C, es wurden Folien von 20 mm Stärke und 0,5 mm Dicke extrudiert.

Zur Prüfung der photochromen Funktionalität dienten
- ein Belichtungsgerät Suntest CPS (Firma ATLAS Material Testing) auf Basis eines Xenonstrahlers, der Sonnenlicht-ähnliches Licht liefert
   o Bestrahlungsstärke im Bereich 300...700 nm = 760 W/m²
   o Filter: UV-Filter - schneidet das Spektrum bei ca. 300 nm ab; die auf die Probe fallende Strahlung entspricht der Sonnenstrahlung im Freien
- ein Farbmessgerät datacolor SF 600 (Firma datacolor)
   o Messung der Remissionskurven 400...700 nm
   o Auswertung entsprechend CIELab-System
   o Angabe der Farbveränderungen als Farbdifferenz ΔE

Die Prüfung erfolgte über die Schritte:
- Vermessung der Proben im unbelichteten Zustand (nach Lagerung im Dunkeln)
- Belichtung im Suntest 1 min mit dem UV-Filter
- schnelle Entnahme der Probe aus dem Suntest und nach 8 s erste Messung des Remissionsspektrums am Farbmessgerät; der erste ⊐E-Wert fällt an
- 30 s Lagerung der Probe im Dunkel (30 s)
- danach wiederum Messung des Remissionsspektrums am Farbmessgerät; der zweite ⊐E-Wert fällt an; Bezug ist wiederum die unbelichtete Probe
- erneute Lagerung der Probe im Dunkel (1 min)
- danach wiederum Messung des Remissionsspektrums am Farbmessgerät -> der dritte ⊐E-Wert fällt an; Bezug ist wiederum die unbelichtete Probe

Die Messung des Kraft-Dehnungs-Verhaltens der Folien erfolgte in Anlehnung an DIN EN ISO 527 - an einer Zugprüfmaschine ZWICK Z010.

Die biologische Abbaubarkeit wurde mit einem Sapromat E entsprechend DIN EN 54900, Teil 2 (Bestimmung der vollständigen biologischen Abbaubarkeit von polymeren Werkstoffen in Laborversuchen), Verfahren 1 (Bestimmung der biologischen Abbaubarkeit in wässrigem Medium durch Bestimmung des biologischen Sauerstoffverbrauches in einem geschlossenen Respirometer) geprüft.

**Tabelle 1: Colour Change - Effekte an funktionaliserter PLA-Folie**

| Photochromer Farbstoff Reversacol^{®} | Weitere Additive | Konzentration | | ⊐E-Werte (23°C) nach | | | |
|---|---|---|---|---|---|---|---|
| | | Farbstoff | Additiv | 8 s | 1 min | 5 min | 60 min |
| | | % | | | | | |
| ohne | - | - | - | 0,3 | 0,2 | 0,2 | 0,2 |
| Berry Red | - | 0,1 | - | 6,0 | 5,2 | 3,9 | 1,0 |
| Aqua Green | - | 0,1 | - | 10,3 | 7,2 | 3,9 | 0,6 |
| ohne | Anatas | - | 0,5 | 0,2 | 0,2 | | |
| Palatinate Purple | Anatas | 0,05 | 1,0 | 7,2 | 4,7 | | |
| ohne | Rutil | - | 1,0 | 0,2 | 0,2 | | |
| Palatinate Purple | Rutil | 0,05 | 1,0 | 8,4 | 5,4 | | |

**Tabelle 2: Festigkeitsabfall der photochromen Folien nach Freibewitterung**

| Photochromer Farbstoff Reversacol^{®} | Weitere Additive | Konzentration | | Festigkeit [N] nach Freibewitterung | | | |
|---|---|---|---|---|---|---|---|
| | | Farbe-stoff | Additiv | | | | |
| | | % | | 0 Tage | 28 Tage | 84 Tage | 224 Tage |
| ohne | - | - | - | 69,6 | 65,7 | 64,7 | 64,8 |
| Berry Red | - | 0,1 | - | 68,7 | 64,2 | 64,7 | 65,2 |
| Aqua Green | - | 0,1 | - | 51,9 | 51,0 | 51,5 | 50,0 |
| ohne | Anatas | - | 0,5 | 74,7 | | | 62,6 |
| Palatinate Purple | Anatas | 0,05 | 1,0 | 68,3 | | | 60,3 |
| ohne | Rutil | - | 1,0 | 56,0 | | | 54,9 |
| Palatinate Purple | Rutil | 0,05 | 1,0 | 57,4 | | | 58,1 |

**Tabelle 3: Sauerstoffverbrauch [mg/g] der Folien im Sapromat-Test nach Bewitterung**

| Photochromer Farbstoff Reversacol^{®} | Weitere Additive | Konzentration | | Sauerstoffverbrauch [mg/g] nach 572 h |
|---|---|---|---|---|
| | | Farbstoff | Additiv | |
| | | % | | |
| ohne | - | - | - | 104 |
| Berry Red | - | 0,1 | - | 238 |
| Aqua Green | - | 0,1 | - | 170 |
| ohne | TiO₂ | - | 0,5 | 254 |
| Palatinate Purple | TiO₂ | 0,05 | 1,0 | 533 |
| ohne | Rutil | - | 1,0 | 83 |
| Palatinate Purple | Rutil | 0,05 | 1,0 | 226 |

Die mit den photochromen Pigmenten ausgerüsteten PLA-Folien zeigen einen deutlichen, reversiblen Farbwechsel (Tabelle 1)

Die mehrmonatige Freibewitterung verändert die mechanischen Kennwerte dieser Folien nur wenig Bei Verwendung des Anatas kommt es dagegen zu einer leichten Reduktion (Tabelle 2) Bei reinen photochromen Substanzen ist dies nicht der Fall Allerdings ist in diesem Falle auch die Abbaugeschwindigkeit geringer (Tabelle3) Die respirometrischen Tests belegen die synergistischen Effekte bei der Kombination von photokatalytisch aktivem TiO₂ und photochromer Farbstoffe So weisen die Vananten mit mehreren Additiven einen höheren Sauerstoffverbrauch auf als Systeme mit nur einem Additiv. Ferner zeigt sich auch, dass nur bei photokatalytisch aktivem TiO₂ (Anatas), nicht aber bei Verwendung der Rutil-Modifikation entsprechende Effekte auftreten

### Beispiel 2 Funktionalisiertes PLA-Spinnvlies mit eingestellter biologischer Abbaubarkeit

Basis und Ausgangsmatenalien stellen das PLA vom Typ 3251 D von NatureWorks, Anatas, der thermochrome Farbstoff Reversatherm Blue (Firma Colux) sowie der photochrome Farbstoff Palatinate Purple (PP) (Firma Vivimed) dar Aus diesen wurde mit dem in Beispiel 1 genannten Extruder Batches hergestellt. Die aus PLA und Farbstoff mit einer Farbstoffkonzentration von 1% hergestellten Masterbatches wurden zu 2 bis 5% während der Spinnvliesherstellung zugegeben. Das auf TiO₂-basierende Batch (10 %) wurde zu 10 % zugegeben. Die Herstellung der Spinnvliese erfolgte aus der Schmelze ohne Verwendung von Lösungsmitteln oberhalb der Schmelztemperatur des PLA bei Temperaturen von 190 bis 220 °C. Die Abzugsgeschwindkeit beträgt 2000 bis 2500 m/min bei einem Durchsatz von 0,5 g/min und Loch. Die erzielten Filamentdurchmesser liegen bei 2,7 dtex, die Flächenmasse bei 150 bis 200 g/m². Im Anschluss an die Spinnvliesherstellung folgte eine thermische Verfestigung mittels Prägekalander bei 45°C.

Die Vliese zeigen, wie auch die Folien in Beispiel 1, keinen signifikanten Abbau der mechanischen Eigenschaften (der Filamente) nach längerer Exposition mit UV-Strahlung in einem Suntest CPS, Atlas Material Testing Technology GmbH (6 Tage, Stellung 5, UV-Filter mit beschichteter Quarzglasschale) (Tabelle 4 und 5). Dennoch erhöht sich der Hydrolysegrad bei enzymatischer Hydrolyse mit Proteinase K (Behandlung 24 h im Becherfärbegerät bei 37°C).

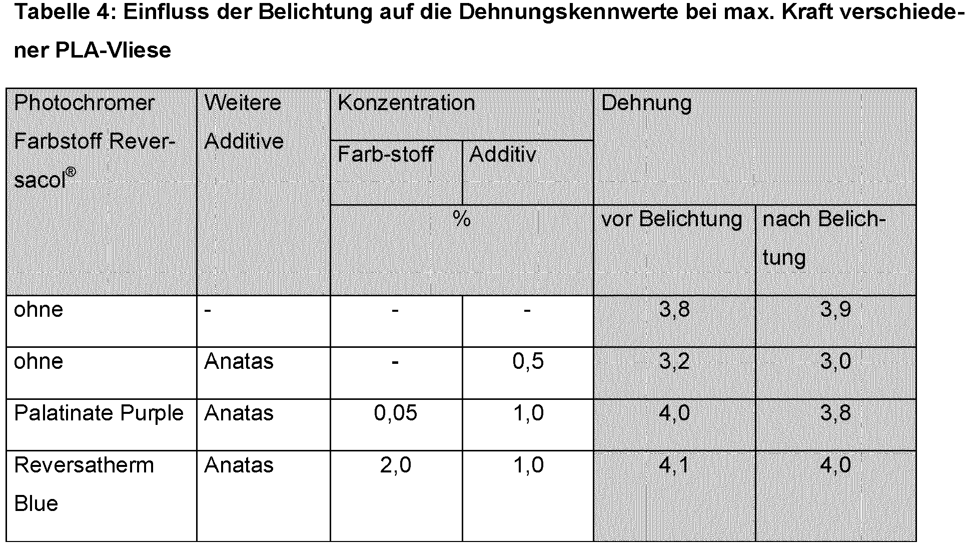

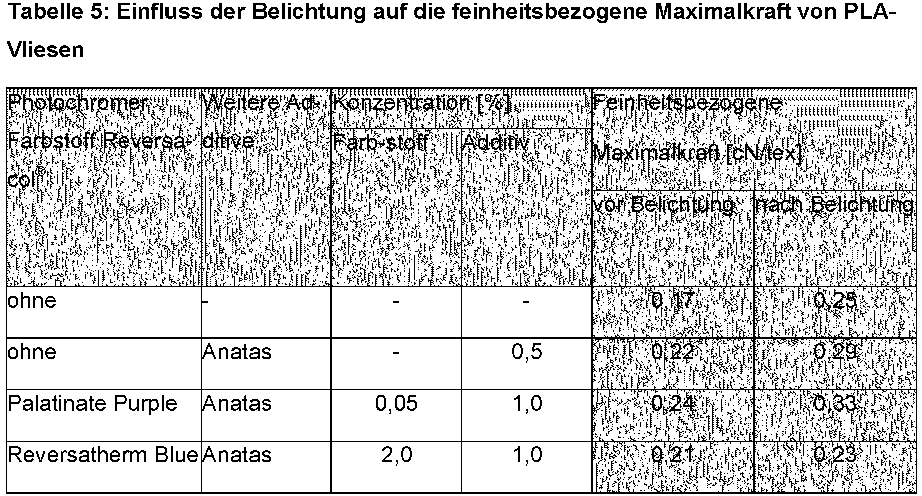

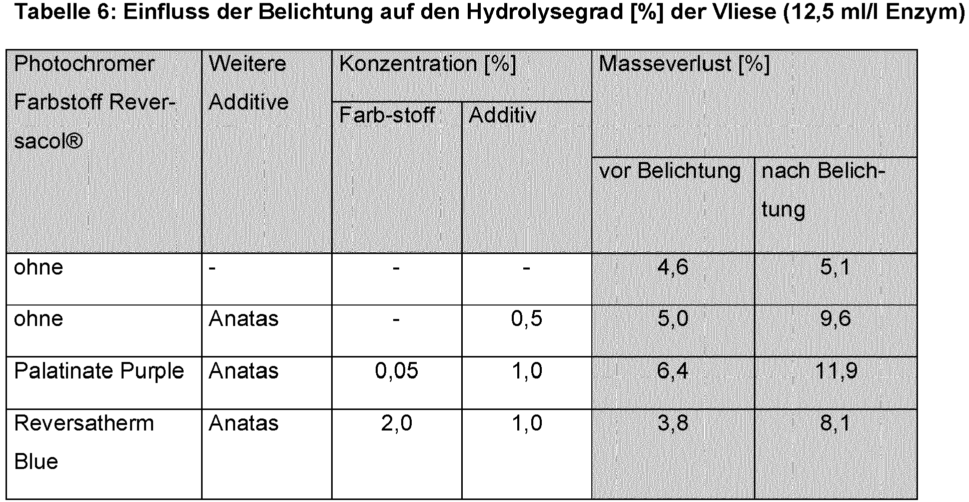

Die in der obigen Tabelle 6 angegebenen Werte zeigen, dass sich zwar der Hydrolysegrad bereits durch Anatas nach Belichtung gegenüber einem reinen PLA erhöht. Die Zugabe eines geeigneten photochromen Farbstoffes hebt aber den Hydrolysegrad noch einmal stark an.

## Patentansprüche

1. Biologisch abbaubares Produkt aus einer Polymerzusammensetzung umfassend wenigstens ein biologisch abbaubares, thermoplastisches Polymer (Biopolymer) ausgewählt aus der Gruppe umfassend Polylactide, Polyhydroxyalkanoate und abbaubare Polyester, enthaltend wenigstens eine photokatalytisch wirksame Substanz, **dadurch gekennzeichnet, dass** diese weiterhin wenigstens eine photochrome Substanz enthält und dass es sich bei der photokatalytisch wirksamen Substanz um eine Metallverbindung, nämlich ein Metalloxid, modifiziertes Metalloxid, dotiertes Metalloxid und/ oder einen Halbleiter handelt.

2. Biologisch abbaubares Produkt aus einer Polymerzusammensetzung nach Anspruch 1, **dadurch gekennzeichnet, dass** es sich bei der photokatalytisch wirksamen Substanz um TiO₂ in Anatas-Modifikation handelt.

3. Biologisch abbaubares Produkt aus einer Polymerzusammensetzung nach Anspruch 1 oder 2, bei dem die photokatalytisch wirksame Substanz in einem Gewichtsanteil von 0,5 % bis 10,0 %, vorzugsweise in einem Gewichtsanteil von 0,5 % bis 2,0 %, vorliegt.

4. Biologisch abbaubares Produkt aus einer Polymerzusammensetzung nach Anspruch 1, **dadurch gekennzeichnet, dass** diese wenigstens eine photochrome Substanz enthält, ausgewählt aus der Gruppe umfassend Spiropyrane, Spirooxazine, Fulgide bzw. Fulgimide, 2,1-b Naphtopyrane, 1,2-b Naphtopyrane, 2,1-b Naphtoxazine und 1,2-b Naphtoxazine.

5. Biologisch abbaubares Produkt aus einer Polymerzusammensetzung nach Anspruch 1 und 4, **dadurch gekennzeichnet, dass** diese wenigstens eine photochrome Substanz in einem Gewichtsanteil von 0,01 % bis 1,0 %, vorzugsweise in einem Gewichtsanteil von 0,03 % bis 0,1 %, enthält.

6. Biologisch abbaubares Produkt aus einer Polymerzusammensetzung nach Anspruch 1, **dadurch gekennzeichnet, dass** diese eine Substanz mit hohem Redoxpotential enthält, ausgewählt aus der Gruppe umfassend anorganische oder organische Eisenoder Cobaltsalze(z.B. Formiate, Acetate, Citrate oder Tartrate), Verbindungen mit einer Chinongruppe (z.B. Hydrochinon und dessen Derivate) oder Verbindungen mit einem Mono-, Oligo- oder Polysaccharid (z.B. Glucose, Fructose, Saccharose).

7. Verfahren zur Herstellung eines biologisch abbaubaren Produkts aus einer Polymerzusammensetzung nach einem der Ansprüche 1 bis 6, **dadurch gekennzeichnet, dass** der Formgebungsprozess, ausgehend von einer thermoplastischen Schmelze, wenigstens einen Schritt zur Herstellung eines funktionalisierten Formkörpers umfasst, insbesondere einer Faser, eines Filaments, eines Vliesstoffs, einer Folie oder eines Spritzgießteils, und wenigstens eine photokatalytisch aktive Substanz sowie eine photochrome Substanz in diesem Verfahrensschritt zugegeben wird.

8. Verfahren nach Anspruch 7, **dadurch gekennzeichnet, dass** wenigstens eine photokatalytisch aktive Substanz sowie eine photochrome Substanz in einer Masterbatchformulierung vorliegend verarbeitet werden.

## Claims

1. A biodegradable product of a polymer composition comprising at least one biodegradable thermoplastic polymer (biopolymer) selected from the group comprising polylactides, polyhydroxyalkanoates and degradable polyesters, containing at least one photocatalytically active substance,
**characterized in that**
it additionally contains at least one photochromic substance, and the photocatalytically active substance is a metal compound, namely a metal oxide, a modified metal oxide, a doped metal oxide and/or a semiconductor.

2. The biodegradable product of a polymer composition according to claim 1,
**characterized in that**
the photocatalytically active substance is TiO₂ in the anatase modification.

3. The biodegradable product of a polymer composition according to claim 1 or 2, in which the photocatalytically active substance is present in a weight ratio of 0.5% to 10.0%, preferably in an amount by weight of 0.5% to 2.0%.

4. The biodegradable product of a polymer composition according to claim 1,
**characterized in that**
it contains at least one photochromic substance selected from the group comprising spiropyrans, spirooxazines, fulgides and/or fulgimides, 2,1-b naphthopyrans, 1,2-b naphthopyrans, 2,1-b naphthaoxazines and 1,2-b naphtha-oxazines.

5. The biodegradable product of a polymer composition according to claims 1 and 4,
**characterized in that**
it contains at least one photochromic substance in an amount by weight of 0.01% to 1.0%, preferably in an amount by weight of 0.03% to 0.1%.

6. The biodegradable product of a polymer composition according to claim 1,
**characterized in that**
it contains a substance with a high redox potential, selected from the group comprising organic or inorganic iron or cobalt salts (e.g., formates, acetates, citrates or tartrates), compounds with a quinone group (e.g., hydroquinone and derivatives thereof) or compounds with a monosaccharide, oligosaccharide or polysaccharide (e.g., glucose, fructose, sucrose).

7. A method for producing biodegradable product from a polymer composition according to any one of claims 1 to 6,
**characterized in that**
the shaping process, starting with a thermoplastic melt, includes at least one step for producing a functionalized molded body, in particular a fiber, a filament, a nonwoven, a film or an injection-molded part, and at least one photocatalytically active substance and one photochromic substance are added in this method step.

8. The method according to claim 7,
**characterized in that**
at least one photocatalytically active substance and one photochromic substance are present and processed in a masterbatch formulation.

## Revendications

1. Produit biodégradable en une composition polymère comprenant au moins un polymère thermoplastique biodégradable (biopolymère) choisi dans le groupe comprenant les polylactides, les polyhydroxyalcanoates et les polyesters dégradables, contenant au moins une substance à action photocatalytique, **caractérisé en ce que** celle-ci contient par ailleurs au moins une substance photochromique et **en ce que** la substance à action photocatalytique est un composé métallique, à savoir un oxyde métallique, un oxyde métallique modifié, un oxyde métallique dopé et/ou un semiconducteur.

2. Produit biodégradable en une composition polymère selon la revendication 1, **caractérisé en ce que** la substance à action photocatalytique est du TriO₂ en modification anatase.

3. Produit biodégradable en une composition polymère selon la revendication 1 ou la revendication 2, dans lequel la substance à action photocatalytique est présente dans une part en poids de 0,5 % à 10,0 %, de préférence dans une part en poids de 0,5 % à 2,0 %.

4. Produit biodégradable en une composition polymère selon la revendication 1, **caractérisé en ce que** celle-ci contient au moins une substance photochromique, choisie dans le groupe comprenant les spiropyrannes, les spirooxazines, les fulgides ou les fulgimides, les 2,1-b naphtopyranes, les 1,2-b naphtopyranes, les 2,1-b naphtoxazines et les 1,2-b naphtoxazines.

5. Produit biodégradable en une composition polymère selon la revendication 1 et la revendication 4, **caractérisé en ce que** celle-ci contient au moins une substance photochromique dans une part en poids de 0,01 % à 1,0 %, de préférence dans une part en poids de 0,03 % à 0,1 %.

6. Produit biodégradable en une composition polymère selon la revendication 1, **caractérisé en ce que** celle-ci contient une substance à haut potentiel redox, choisie dans le groupe comprenant des sels de fer ou de cobalt anorganiques ou organiques (par ex. des formiates, des acétates, des citrates ou des tartrates), des composés avec un groupe quinone (par ex. l'hydroquinone et ses dérivés) ou des composés avec un monosaccharide, un oligosaccharide ou un polysaccharide (par ex. du glucose, du fructose, du saccharose).

7. Procédé destiné à fabriquer un produit biodégradable en une composition polymère selon l'une quelconque des revendications 1 à 6, **caractérisé en ce que** le processus de façonnage, à partir d'une masse thermoplastique fondue comprend au moins une étape de fabrication d'un corps moulé fonctionnalisé, notamment d'une fibre, d'un filament, d'un non-tissé, d'un film ou d'une pièce moulée par injection et **en ce que** dans cette étape de procédé, il est ajouté au moins une substance à activité photocatalytique, ainsi qu'une substance photochromique.

8. Procédé selon la revendication 7, **caractérisé en ce que** dans le cas présent, on met en oeuvre au moins une substance à activité photocatalytique, ainsi qu'une substance photochromique dans une formulation à mélange maître.
